# EUROPEAN PATENT APPLICATION

(11) **EP 4 750 082 A1**
(43) Date of publication of application: **27.05.2026**
(21) Application number: 25214905.9
(22) Date of filing: 11.11.2025
(51) Int. Cl.: H04R 3/12, H04R 5/04, G06F 3/16

(54) **SYSTEMS AND METHODS FOR DYNAMIC INTEGRATION OF PORTABLE AUDIO DEVICES IN VEHICLES**

(30) Priority: 20.11.2024 US 202463723052 P
(71) Applicant: Harman International Industries, Inc., Stamford, Connecticut 06901 (US)
(72) Inventor: HAVEMANN, Marcel Pilgaard, 7560 Hjerm (DK); CEYLAN, Sabrina, 85051 Ingolstadt (DE); OPPEL, Quirin, 80636 Munich (DE); SONG, Dishan (Ray), 80809 München (DE)
(74) Representative: Kraus & Lederer PartGmbB

(57) **Abstract**

Systems and methods are herein provided for dynamic integration of portable audio devices into a vehicle audio system. In one example, a vehicle audio system comprises one or more processors; and memory storing instructions that when executed cause the one or more processors to: recognize one or more portable audio devices paired to the vehicle audio system via a companion application; establish a communication link to each of the one or more portable audio devices; determine an audio output configuration for each of the one or more portable audio devices; integrate each of the one or more portable audio devices into the vehicle audio system; and output audio content via the one or more portable audio devices and one or more cabin output speakers of the vehicle audio system according to the audio output configuration for each of the one or more portable audio devices.

## Description

### FIELD

The disclosure relates to the use of portable audio devices and integration thereof into in-vehicle audio systems.

### BACKGROUND

In conventional vehicular audio systems, audio performances are played through speakers permanently integrated into the vehicle, such as at various locations around a perimeter of the vehicle's cabin. However, such vehicle audio systems are limited to these built-in hardware configurations and thus lack the flexibility to adapt to modern portable audio devices which occupants of the vehicle may carry with them and bring into the vehicle.

### SUMMARY

Systems and methods are provided herein for dynamic integration of portable audio devices into vehicle audio systems. For example, via a companion app, one or more portable audio devices may be paired with the vehicle. The vehicle audio system may automatically recognize the paired portable audio devices in response. When integrated into the vehicular audio system, the portable audio devices may play audio supplied by an audio amplifier of the vehicle.

The vehicle audio system may download or otherwise retrieve device-specific configurations of each of the portable audio devices. Further, audio output profiles for the portable audio devices may be determined based on user inputs (e.g., user selection of various profiles for different audio output frequencies like bass and mid-range) and/or automatically determined based on predefined tunes of specific products in the vehicle, such as the specific devices paired with the system and the in-cabin loudspeakers.

It should be understood that the summary above is provided to introduce in simplified form a selection of concepts that are further described in the detailed description. It is not meant to identify key or essential features of the claimed subject matter, the scope of which is defined uniquely by the claims that follow the detailed description. Furthermore, the claimed subject matter is not limited to implementations that solve any disadvantages noted above or in any part of this disclosure.

### BRIEF DESCRIPTION OF THE DRAWINGS

The disclosure may be better understood from reading the following description of non-limiting embodiments, with reference to the attached drawings, wherein below:
FIG. 1 shows a block diagram of an exemplary vehicle system including a vehicle audio system, a companion application, and one or more portable audio devices, in accordance with one or more embodiments of the present disclosure;
FIG. 2 shows an example partial view of a vehicle cabin including a human machine interface (HMI), in accordance with one or more embodiments of the present disclosure;
FIG. 3 shows a block diagram of an example in-vehicle computing system, in accordance with one or more embodiments of the present disclosure;
FIG. 4 shows a block diagram of portions of an exemplary portable audio device, in accordance with one or more embodiments of the present disclosure;
FIG. 5 shows a flowchart illustrating a method for dynamic integration of portable audio devices into a vehicle audio system, in accordance with one or more embodiments of the present disclosure;
FIG. 6 shows an example user interface of the companion application, in accordance with one or more embodiments of the present disclosure; and
FIG. 7 shows another example user interface of the companion application, in accordance with one or more embodiments of the present disclosure.

### DETAILED DESCRIPTION

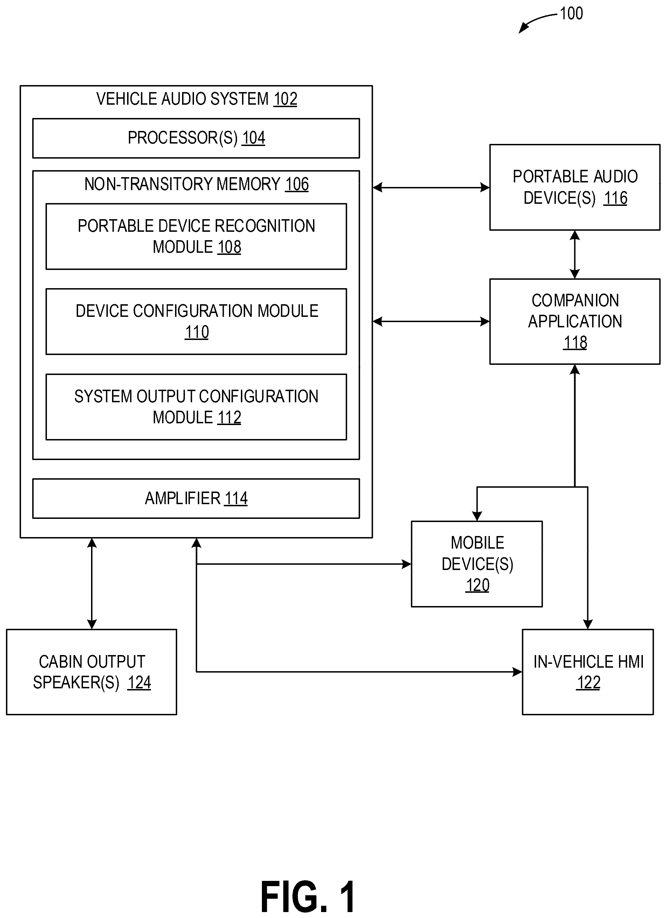

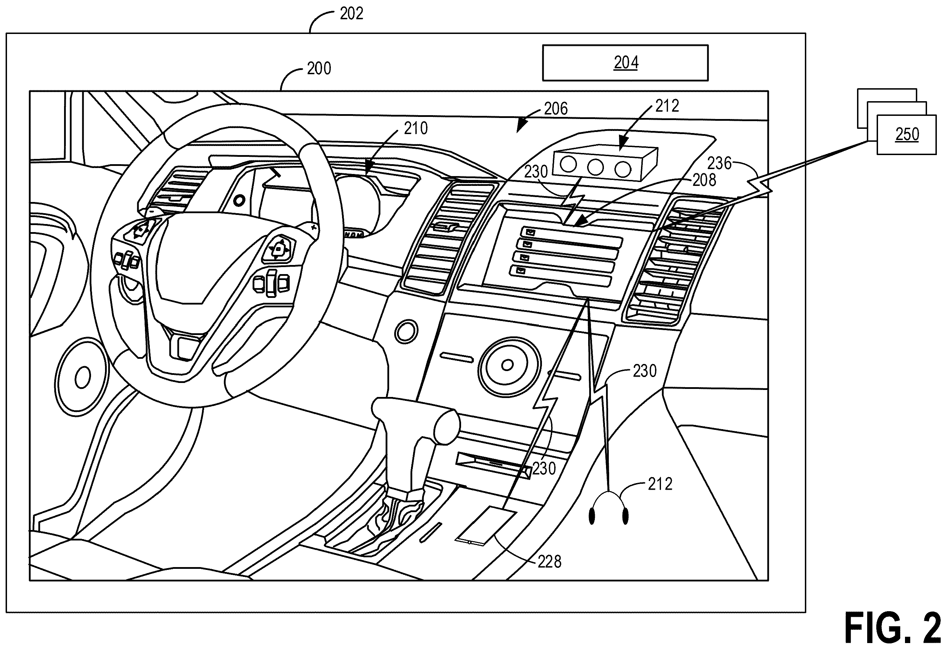

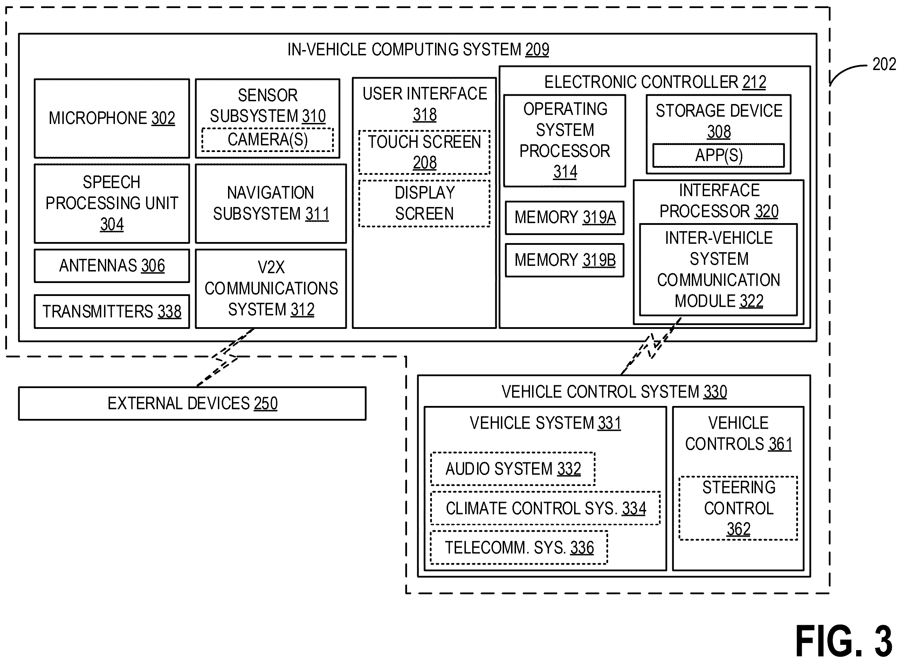

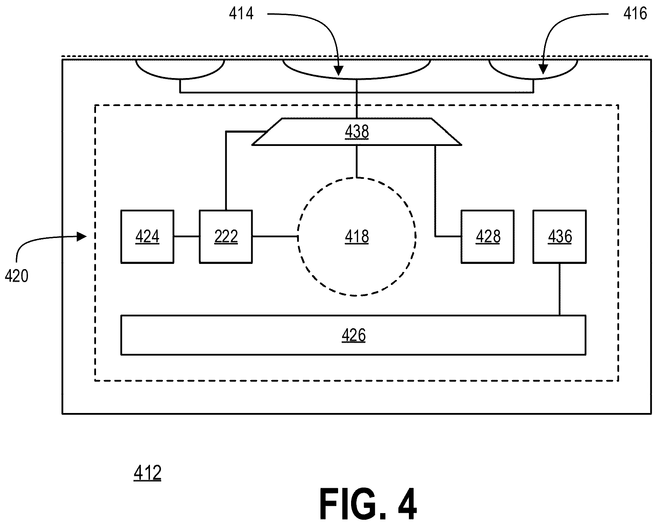

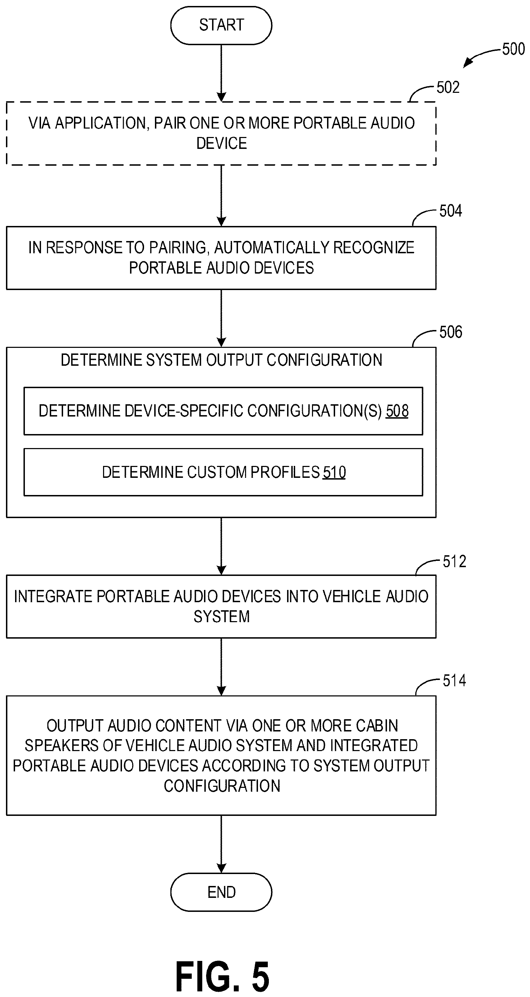

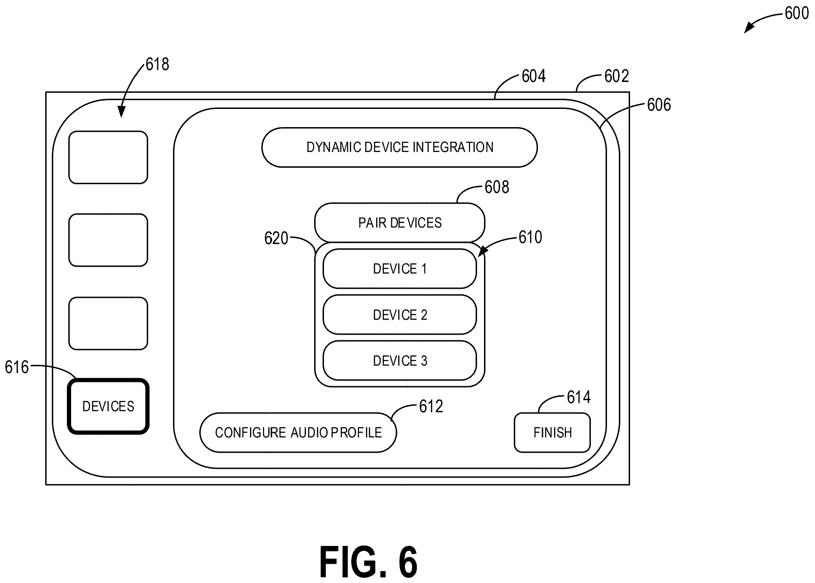

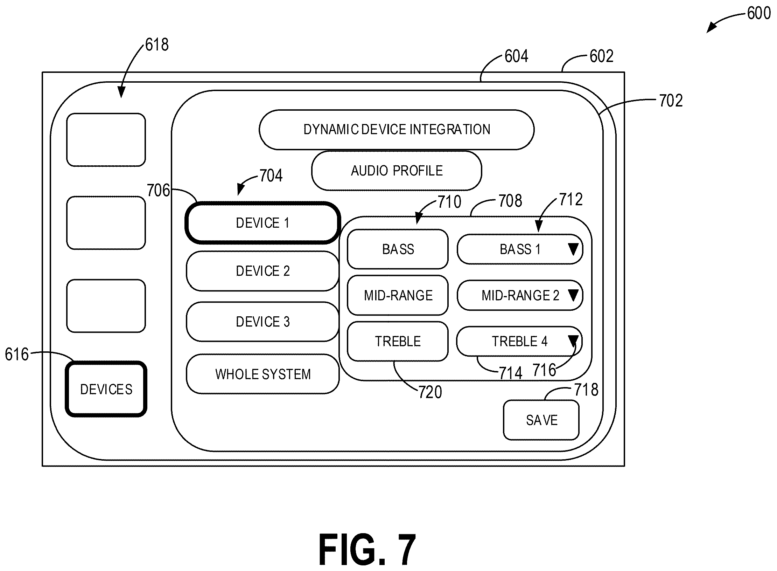

Disclosed herein are various systems and methods for dynamic integration of portable audio devices into a vehicle audio system. In particular, systems and methods herein are disclosed for pairing portable audio devices to a vehicle audio system via a companion application accessible by a human machine interface (HMI) of the vehicle or a mobile device and configuring audio output profiles for the integrated audio system. FIG. 1 shows an exemplary vehicle system that includes the vehicle audio system, one or more portable audio devices, and one or more in-cabin fixed speakers. FIG. 2 shows a partial in-cabin view of the vehicle with one or more integrated portable audio devices. FIG. 3 shows an exemplary vehicle computing system. FIG. 4 shows a block diagram of various components and features of an exemplary portable audio device. FIG. 5 shows a flowchart illustrating a method for integrating and configuring a portable audio device into a vehicle system. FIGS. 6 and 7 show user interfaces of the companion application through which users may pair devices and configure audio profiles.

Starting with FIG. 1, an exemplary vehicle system 100 is shown, including a vehicle audio system 102. The vehicle system 100 as herein presented may be a vehicle configured for driving on roads, such as a battery electric vehicle (BEV), a hybrid electric vehicle (HEV, vehicle with an internal combustion engine, or any other type of suitable vehicle. Vehicle audio system 102 includes one or more processors 104 configured to execute machine readable instructions stored in non-transitory memory 106. Memory 106 and other memory referred to herein may include one or more data storage structures, such as optical memory devices, magnetic memory devices, or solid-state memory devices, for storing programs and routines executed by processor(s) 104 to carry out various functionalities disclosed herein. Memory 106 may include any desired type of volatile and/or non-volatile memory such as, for example, static random access memory (SRAM), dynamic random access memory (DRAM), flash memory, read-only memory (ROM), etc.

Processor(s) 104 and other processors referred to herein may be any suitable processor, processing unit, or microprocessor configured for use in a vehicle application, for example. Processor(s) 104 may be a multi-processor system, and thus, may include one or more additional processors that are identical or similar to each other and that are communicatively coupled via an interconnection bus. Processor(s) may be single core or multi-core, and the programs executed thereon may be configured for parallel or distributed processing. In some embodiments, processor(s) 104 may optimally include individual components that are distributed throughout two or more devices, which may be remotely located and/or configured for coordinated processing. In some embodiments, one or more aspects of processor(s) 104 may be virtualized and executed by remotely-accessible networked computing devices configured in a cloud computing configuration.

The vehicle system 100 may also comprise one or more cabin output speakers 124 and one or more portable audio devices 116. The cabin output speakers 124 may be fixed or otherwise mounted speakers that are permanently integrated into the vehicle. The one or more cabin output speakers 124 may be configured to output audio content, as supplied by the vehicle audio system 102, for example via the amplifier 114. As an example, the vehicle may be conceptually partitioned into a plurality of acoustic zones, such as a front driver side zone, a front passenger side zone, a rear driver side zone, and a rear passenger side zone. Each acoustic zone of the vehicle may be equipped with one or more cabin output speakers, for example mounted in a corresponding door, in a headrest, or the like.

The one or more portable audio devices 116 may include any combination of portable speakers, headphone or other wearable devices, and the like. The one or more portable audio devices 116 may be brought into the vehicle by an occupant. As a non-limiting example, a first occupant may bring a personal pair of headphones into the vehicle and another occupant may bring a portable loudspeaker to be positioned in a trunk, hatchback, truck bed or other reasonable position. Each of the one or more portable audio devices 116 may not be in a fixed position within the vehicle. Further, each of the one or more portable audio devices 116 may be equipped with a wireless interface, such as a Bluetooth or other radio communication interface.

The one or more portable audio devices 116 may be paired to the vehicle audio system 102 via a companion application 118. The companion application 118 may be accessed and displayed via a display device of one or more mobile devices 120 that are also in communication with the vehicle audio system 102 or via in-vehicle HMI 122. The in-vehicle HMI 122 may be at least part of an infotainment system that includes a display devices, one or more input devices (e.g., knobs, turn dials, touch screen display), and the like for interacting with various components of a vehicle computing system. For example, a navigation application may be displayed by the in-vehicle HMI 122. The companion application 118 may be downloaded to the one or more mobile devices 120 and/or the in-vehicle HMI 122 and may be accessed by occupants of the vehicle or other users of the vehicle to pair and configure portable audio devices with the vehicle audio system 102 as will be herein disclosed.

Non-transitory memory 106 may comprise a plurality of modules storing instructions executable by the one or more processors 104. For example, non-transitory memory 106 may include a portable device recognition module 108, a device configuration module 110, and a system output configuration module 112. The portable device recognition module 108 may store instructions for recognizing portable audio devices that have been paired via the companion application 118 and establishing connection to the paired devices. For example, a first device may be paired to the vehicle audio system 102 via the companion application 118. Then, in response, the vehicle audio system 102 may recognize the first device, for example by an interface signature (e.g., a Bluetooth device address or other identifier), and may establish communication with the first device, such as establishing a Bluetooth connection with the first device.

The device configuration module 110 may include instructions for determining device-specific configurations of the paired devices. For example, when the wireless communication between the vehicle audio system 102 and the first device is established, the vehicle audio system 102 may retrieve from the first device various configurations, settings, and data thereof, including number of speakers, speaker type, device type, suitable audio settings (e.g., thresholds for bass, mid-range, and treble), and the like which may be predefined for the particular first device.

The system output configuration module 112 may include instructions for determining system audio output configurations for the integrated devices, which may include the cabin output speaker(s) 124 and any paired portable audio devices. For example, based on user inputs to the companion application, in-vehicle HMI, or mobile device(s) and/or automatically based on the retrieved device configurations, the vehicle audio system 102 may determine a configuration for audio output.

For example, audio content may be supplied to the cabin output speaker(s) 124 and to one or more paired portable audio devices of the one or more portable audio devices 116 by the amplifier 114. The audio content may be provided by the in-vehicle HMI 122 (e.g., by accessing the content via the radio, a media application, or other), one of the one or more mobile devices 120, or another source. The audio content may be supplied by the amplifier 114 according to the determined configuration, as determined based on instructions stored in system output configuration module 112. For example, each paired portable audio device may have retrievable or otherwise determinable data thereof, such as a device type and suitable output settings and configurations. This information may be retrieved and processed according to instructions stored in the device configuration module 110. Similarly, the cabin-mounted speakers may have known suitable output settings and configurations.

Further, via the companion application, users may choose from multiple profiles for audio output, including multiple profiles for bass, mid-range, and/or treble enhancement according to their personal preferences and optimal settings for the integrated devices. Bass, in this context, may include frequencies between 20 and 300 Hz, mid-range may include frequencies between 300 Hz to 4 kHz, and treble includes any frequency above 4 kHz. In particular, specific paired devices may be configured individually and/or all integrated devices, both portable and fixed, may be configured as a whole. As a non-limiting example, a first user may pair a headphone device and a second user may pair a portable loudspeaker. The first user may configure audio output for the headphone device separately from the rest of the integrated devices and the second user may configure audio output for all the integrated devices. In this way, the first user may listen to the supplied audio content in a manner suitable to the wearable nature of the headphone device while the second user may listen to the supplied audio content in a manner suitable to the specific combination of cabin-mounted speakers and the loudspeaker.

Additionally, audio output profiles may be automatically detected and applied based on predefined tunings of specific products in the vehicle. For example, a device type and predefined suitable setting for each paired portable audio device may be obtained when the system recognizes the device when paired. Based on the device type and predefined suitable settings, the vehicle audio system 102 may automatically configure audio output profiles. As a non-limiting example, one or more small portable loudspeakers may be paired with the vehicle audio system 102. Based on the device type specifics and suitable settings thereof, the vehicle audio system 102 may determine a first audio output configuration that includes configurations (e.g., levels) of bass, mid-range, and treble sounds. Conversely, a large scale loudspeaker (e.g., a boombox) may be paired with the vehicle audio system 102. Based on the device type specifics and suitable settings thereof, which may be different when compared to the small portable loudspeakers, the vehicle audio system 102 may determine a second audio output configuration that includes configurations of bass, mid-range, and treble sounds. The configurations included in the second audio output configuration may be different from that of the first audio output configuration because of the differences in the device type specifics and suitable settings of the paired devices. In some examples, the system may automatically switch over to the brand of the portable product if it is brought into the vehicle after an initial pairing.

In this way, users may integrate portable devices into a vehicle audio system and configure the vehicle audio system to output audio content in a dynamic manner. Thus, when audio content is outputted by the vehicle audio system, both the cabin output speakers fixed in the vehicle and the paired portable audio devices may output the audio. Further, configurations may be determined for individual devices as well as for the integrated system of devices as a whole, as will be further described herein.

FIG. 2 shows an example partial view of an interior of a cabin 200 of a vehicle 202, in which a driver and/or one or more passengers may be seated. Vehicle 202 may be the vehicle system 100 shown by FIG. 1 and described above, in some examples.

Vehicle 202 of FIG. 2 may be a motor vehicle including drive wheels (not shown) and a power source 204 configured to provide torque to the drive wheels, such as an internal combustion engine and/or battery. In examples in which the power source 204 includes an internal combustion engine, the internal combustion engine may include one or more combustion chambers which may receive intake air via an intake passage and exhaust combustion gases via an exhaust passage. Vehicle 202 may be a road automobile, among other types of vehicles. In some examples, vehicle 202 may include a hybrid propulsion system including an energy conversion device operably to absorb energy from vehicle motion and/or the engine and convert the absorbed energy to an energy form suitable for storage by an energy storage device. Vehicle 202 may be a fully electric vehicle in some examples, incorporating vehicle cells, solar energy capturing elements, and/or other energy storage systems for powering the vehicle.

As shown, the vehicle 202 may include an instrument panel 206 with various displays and controls accessible to a human driver (also referred to as the user and/or occupant) of the vehicle 202. For example, instrument panel 206 may include a touch screen display 208, or HMI 208, of an in-vehicle computing system and an instrument cluster 210. Touch screen display 208 may receive user input to the in-vehicle computing system for controlling visual display output, user preferences, control parameter selection, and so on. While the example system shown in FIG. 2 includes controls that may be performed via a user interface in the in-vehicle computing system, such as touch screen display 208, without a separate control panel, in other embodiments, the vehicle may include additional control panels. The touch screen display 208 may display one or more user interfaces with which occupants of the vehicle may interact. In some embodiments, one or more hardware elements of in-vehicle computing system 209, such as touch screen display 208, various control dials, knobs and buttons, memory, processor(s), and my interface elements (e.g., connectors or ports) may form an integrated head unit that is installed in instrument panel 206 of the vehicle. The head unit may be fixedly or removably attached in instrument panel 206. In additional or alternative embodiments, one or more hardware elements of in-vehicle computing system 209 may be modular and may be installed in multiple locations of the vehicle.

While the example system shown in FIG. 2 includes audio system controls that may be performed via a user interface of in-vehicle computing system 209 (such as touch screen display 208) without separate audio system control panel, in other embodiments, the vehicle may include an audio system control panel, which may include controls for a conventional vehicle audio system such as a radio, compact disc player, MP3 player, and so on. The audio system controls may include features for controlling or configuring one or more aspects of audio output via one or more portable audio devices 212 of an integrated audio system that includes both fixed cabin speakers and one or more paired portable audio devices as is herein described. The portable audio devices 212 as shown may include small speakers, wearable device (e.g., headphones), large scale loudspeakers (e.g., boomboxes), and the like. For example, the in-vehicle computing system or the audio system controls may control a volume of audio output, a distribution of sound among the individual speakers of the integrated audio system, an equalization of audio signals, bass, mid-range, and treble contributions and levels, and/or any other aspect of the audio output.

In further examples, in-vehicle computing system 309 may adjust a radio station selection, a playlist selection, a source of audio input (e.g., from radio or CD or MP3), and so forth, based on user input received directly via touch screen display 208, or based on data regarding the user (such as a physical state and/or environment of the user) received via external devices 250 and/or mobile device 228.

The audio system of the vehicle may include an audio amplifier (not shown) coupled to plurality of loudspeakers (not shown). In some embodiments, one or more hardware elements of in-vehicle computing system 209, such as touch screen display 208, a display screen, various control dials, knobs and buttons, memory, processor(s), and any interface elements (e.g., connectors or ports) may form an integrated head unit that is installed in the instrument panel 206 of the vehicle. The head unit may be fixedly or removably attached in instrument panel 206. In additional or alternative embodiments, one or more hardware elements of the in-vehicle computing system 209 may be modular and may be installed in multiple locations of the vehicle.

Cabin 200 may also include one or more user objects, such as mobile device 228 and the one or more portable audio devices 212, which are stored in the vehicle before, during, and/or after travelling. The mobile device 228 may include a smart phone, a tablet, a laptop computer, a portable media player, and/or any suitable mobile computing device. The mobile device 228 and each portable audio device 212 may be connected to the in-vehicle computing system via a respective communication link 230. The communication link 230 may be wired (e.g., via Universal Serial Bus [USB], Mobile High-Definition Link [MHL], High-Definition Multimedia Interface [HDMI], Ethernet, and so on) or wireless (e.g., via Bluetooth^{®}, WIFI, WIFI direct, Near-Field Communication [NFC], cellular connectivity, and so forth) and configured to provide two-way communication between the mobile device and the in-vehicle computing system.

The mobile device 228 and/or each of the one or more portable audio devices 212 may include one or more wireless communication interfaces for connecting to one or more communication links (e.g., one or more of the example communication links described above). The wireless communication interface may include one or more physical devices, such as antenna(s) or port(s) coupled to data lines for carrying transmitted or received data, as well as one or more modules/drivers for operating the physical devices in accordance with other devices in the mobile device. For example, each respective communication link 230 may provide sensor and/or control signals from various vehicle systems (such as vehicle audio system, climate control system, and so on) and the touch screen display 208 to the connected device, such as the mobile device 228 or one of the one or more portable audio devices 212, and may provide control and/or display signals from the devices to the in-vehicle systems and the touch screen display 208. In some examples, the respective communication link 230 may also provide power to the connected device from an in-vehicle power source in order to charge an internal battery of the device in examples in which the communication link is a wired connection.

In-vehicle computing system 209 may also be communicatively coupled to additional devices operated and/or accessed by the user but located external to vehicle 202, such as one or more external devices 250. In the depicted embodiment, external devices are located outside of vehicle 202 though it will be appreciated that in alternate embodiments, external devices may be located inside cabin 200. The external devices may include a server computing system, personal computing system, portable electronic device, electronic wrist band, electronic head band, portable music player, electronic activity tracking device, pedometer, smart-watch, GPS system, and so forth. External devices 250 may be connected to the in-vehicle computing system via communication link 236 which may be wired or wireless, as discussed with reference to communication link 230, and configured to provide two-way communication between the external devices and the in-vehicle computing system. For example, external devices 250 may include one or more sensors and communication link 236 may transmit sensor output from external devices 250 to in-vehicle computing system 209 and touch screen display 208. External devices 250 may also store and/or receive information regarding contextual data, user behavior/preferences, operating rules, and so on, and may transmit such information from the external devices 250 to in-vehicle computing system 209 and touch screen display 208.

In-vehicle computing system 209 may analyze the input received from external devices 250, mobile device 228, the one or more portable audio devices 232, and/or other input sources and select settings for various in-vehicle systems (such as audio output, as herein described, or a climate control system), provide output via touch screen display 208 and/or speakers of the integrated audio system (including the one or more portable audio devices 212 as well as fixed cabin speakers), communicate with mobile device 228 and/or external devices 250, and/or perform other actions based on the assessment. In some embodiments, all or a portion of the assessment may be performed by the mobile device 228 and/or the external devices 250.

In some embodiments, one or more of the external devices 250 may be communicatively coupled to in-vehicle computing system 209 indirectly, via mobile device 228 and/or another of the external devices 250. For example, communication link 236 may communicatively couple external devices 250 to mobile device 228 such that output from external devices 250 is relayed to mobile device 228. Data received from external devices 250 may then be aggregated at mobile device 228 with data collected by mobile device 228, the aggregated data then transmitted to in-vehicle computing system 209 and touch screen display 208 via the respective communication link 230. Similar data aggregation may occur at a server system and then transmitted to in-vehicle computing system 209 and touch screen display 208 via communication link 236 and/or respective communication links 230.

When one or more portable audio devices 212 are integrated into the vehicle audio system, the touch screen display 208 and/or the computing system 209 may be used to control each of the one or more portable audio devices 212, such as by providing audio performances to the audio amplifier, which in turn provides the performances to the portable audio devices 212. Computing system 209 may prepare the audio amplifier of the vehicle for being coupled to the one or more portable audio devices 212 and/or for decoupling the devices when users remove the devices from the vicinity of the vehicle (e.g., thereby breaking the established communication links). Moreover, audio performances (e.g., audio content) may be provided to the one or more portable audio devices 212 through the audio amplifier by computing system 209, mobile device 228, and/or external devices 350.

In some examples, the touch screen display 208 may be configured to display user interfaces of a companion application through which users may pair portable audio devices to the audio system for integration. As an example, when a portable audio device is in wireless connection with the instrument panel 206 via the respective communication link 230, the user may pair the portable audio device with the audio system, thereby signaling that the portable audio device is to be integrated into the audio system. In response to pairing the portable audio device, the system may recognize the device, determine one or more configurations, and integrate the device into the system such that audio performances may be outputted by the portable audio device as well as the cabin output speakers.

FIG. 3 shows a block diagram of an in-vehicle computing system 209 integrated inside vehicle 202. In-vehicle computing system 209 may be referred to herein as a controller and/or electronic controller in some examples. In-vehicle computing system 209 may perform one or more of the methods described herein in some embodiments. In-vehicle computing system 209 may include, or be coupled to, various vehicle systems, sub-systems, hardware components, as well as software applications and systems that are integrated in, or integratable into, vehicle 202.

In-vehicle computing systems 209 may include one or more processors including an operating system processor 314 and an interface processor 320. Operating system processor 314 may execute an operating system on in-vehicle computing system 209, and control input/output, display, and other operations of in-vehicle computing system 209. Interface processor 320 may communicate with a vehicle control system 330 via an inter-vehicle system communication module 322.

Inter-vehicle system communication module 322 may output data to one or more other vehicle systems 331 and/or one or more other vehicle control elements 361, while also receiving data input from other vehicle systems 331 and other vehicle control elements 361, e.g., by way of vehicle control system 330. When outputting data, inter-vehicle system communication module 322 may provide a signal via a bus corresponding to any status of the vehicle, the vehicle surroundings, or the output of any other information source connected to the vehicle. Vehicle data outputs may include, for example, analog signals (such as current velocity), digital signals provided by individual information sources (such as clocks, thermometers, location sensors such as GPS sensors, and so on), digital signals propagated through vehicle data networks (such as an engine controller area network (CAN) bus through which engine related information may be communicated, a climate control CAN bus through which climate control related information may be communicated, and a multimedia data network through which multimedia data is communicated between multimedia components in the vehicle, and so on. For example, in-vehicle computing system 209 may retrieve from the engine CAN bus the current speed of the vehicle estimated by the wheels sensors, a power state of the vehicle via a battery and/or power distribution system of the vehicle, an ignition state of the vehicle, a condition of one or more air bags of the vehicle, a condition of hazard lights of the vehicle, a condition of the power source 204 described with respect to FIG. 2, and so on. In addition, other interfacing means such as Ethernet may be used as well without departing from the scope of this disclosure.

A storage device 308 may be included in the in-vehicle computing system 209 to store data such as instructions executable by operating system processor 314 and/or interface processor 320 in non-volatile form. Storage device 308 may store application data to enable in-vehicle computing system 209 to run an application for connecting to a cloud-based server and/or collecting information for transmission to the cloud-based server. The application may retrieve information gathered by vehicle systems/sensors, input devices (e.g., a user interface 318), data stored in one or more storage devices, such as a volatile memory 319A or a non-volatile memory 319B, devices in communication with the in-vehicle computing system, and so on. In-vehicle computing system 209 may further include a volatile memory 319A. Volatile memory 319A may be random access memory (RAM). Non-transitory storage devices may store instructions and/or code that, when executed by a processor (e.g., operating system processor 314 and/or interface processor 320), controls in-vehicle computing system 209 to perform one or more of the actions described in this disclosure.

One or more additional sensors may be included in a sensor subsystem 310 of in-vehicle computing system 209. For example, sensor subsystem 310 may include a camera, such as a rear view camera for assisting a user in parking the vehicle and/or a cabin camera for identifying a user (e.g., using facial recognition and/or user gestures). Sensor subsystem 310 of in-vehicle computing system 209 may communicate with and receive inputs from various vehicle sensors and may further receive user inputs. For example, the inputs received by sensor subsystem 310 may include transmission gear position, transmission clutch position, gas pedal input, brake pedal input, transmission selector position, vehicle speed, engine speed, mass airflow through the engine, ambient temperature, intake air temperature, and so on, as well as inputs from climate control system sensors (such as heat transfer fluid temperature, antifreeze temperature, fan speed, passenger compartment temperature , desired passenger compartment temperature, ambient humidity, and so on), an audio sensor detecting voice commands issued by a user, a fob sensor receiving commands from and optionally tracking the geographic location/proximity of a fob of the vehicle, and so on.

While certain vehicle system sensors may communicate with sensor subsystem 310 alone, other sensors may communicate with both sensor subsystem 310 and vehicle control system 330, or may communicate with sensor subsystem 310 indirectly via vehicle control system 330. A navigation subsystem 311 of in-vehicle computing system 209 may generate, transmit, receive, and/or process navigation information such as location information (e.g., via a GPS sensor and/or other sensors from sensor subsystem 310), route guidance, traffic information, point-of-interest (POI) identification, and/or provide other navigational services for the driver.

Vehicle control system 330 may include controls for controlling aspects of various vehicle systems 331 involved in different in-vehicle functions. These may include, for example, controlling aspects of vehicle audio system 332, aspects of a climate control system 334, aspects of a telecommunication system 336, and so on.

Vehicle control system 330 may also include controls for adjusting the settings of various vehicle control elements 361 (or vehicle controls, or vehicle system control elements) related to the engine and/or auxiliary elements within the cabin of the vehicle, such as one or more steering wheel controls 362 (e.g., steering wheel-mounted audio system controls, cruise controls, windshield wiper controls, headlight controls, turn signal controls, and so on), instrument panel controls, microphone(s), accelerator/brake/clutch pedals, a gear shift, door/window controls positioned in a driver or passenger door, seat controls, cabin light controls, audio system controls, cabin temperature controls, and so on. Vehicle control elements 351 may also include internal engine and vehicle operation controls (e.g., engine controller module, actuators, valves, and so on) that are configured to receive instructions via the CAN bus of the vehicle to change operation of one or more of the engine, exhaust system, transmission, and/or other vehicle system.

One or more elements of in-vehicle computing system 209 may be controlled by a user via user interface 318. User interface 318 may include a graphical user interface presented on a touch screen, such as touch screen 208 and/or display screen 211 of FIG. 2, and/or user-actuated buttons, switches, knobs, dials, sliders, and so on. For example, user-actuated elements may include steering wheel controls, door and/or window controls, instrument panel controls, audio system settings, climate control system settings, and the like. A user may also interact with one or more applications of in-vehicle computing system 209 via user interface 318. In addition to receiving a user's vehicle setting preferences on user interface 318. Notifications and other messages (e.g., received messages), as well as navigational assistance, may be displayed to the user on a display of the user interface. User preferences/information and/or response to presented messages may be performed via user input to the user interface.

Although the electronic controller 212 is shown including the operating system processor 314, memory 319A, memory 319B, and so on, in some embodiments the electronic controller 212 may include a different number and/or configuration of components. For example, the electronic controller 212 may additionally be integrated with the one or more antennas 306, the one or more transmitters 338, and so on.

FIG. 4 shows a block diagram of portions of a portable audio device 412, which may be substantially similar to one of the one or more portable audio devices 116 of FIG. 1 or one of the or more portable audio devices 212 of FIG. 2. As depicted, portable audio device 412 comprises a speaker 414, and in various embodiments, portable audio device 412 may comprise one or more additional speakers 416. Portable audio device 212 may also comprise a processing circuitry 420.

In various embodiments, processing circuitry 420 may comprise custom-designed logic devices or circuitry to perform various operations. For some embodiments, processing circuitry 420 may comprise at least one or more processors 422, a memory 424, and a power source 426 (e.g., a battery, such as disclosed herein), which may be arranged to perform various operations of processing circuitry 420. In some embodiments, one or more devices or circuits of processing circuitry 420 may be implemented by combinations of logic devices, circuitry, other hardware elements, and/or software-configured elements. In some examples, processors 422 may include a central processor (CPU). For some examples, processors 422 may include other electronic components capable of carrying out processing functions, such as one or more field-programmable gate arrays (FPGAs), digital signal processors, and/or graphics components.

Processing circuitry 420 may comprise an interface 428. Interface 428 may be configured to one or both of wireless and wired connections. For example, for wireless connections, the interface 428 may include a Bluetooth, Bluetooth Low Energy, Ultra-Wide Band, or other radio interface. For wired connections, the interface 428 may include a connection port into which a wire (e.g., a USB, USB-C, AUX, or other) may be inserted. The interface 418 may be operable to couple the portable audio device 412 to the vehicle.

When integrated with the vehicle audio system, portable audio device 412 may be operable to receive audio content supplied by a vehicular audio amplifier through the wired or wireless interface 428. When coupled to the vehicular audio amplifier via a wired connection, speakers 414 (and/or one or more additional speakers 416) of the portable audio device 412 may be powered by and/or driven by the audio amplifier, and various electronic circuitries of portable audio device 412 may be placed in a lower power state and/or may be powered down, with the exception of a circuitry for controlling a battery charging operation in the example of a wired interface.

In contrast, when coupled via a wireless interface, portable audio device 412 may be operable to receive audio content supplied over a wireless communication link implemented by wireless interface 428. When coupled via the wireless interface, speaker 414 and/or additional speakers 416 may be powered by and/or driven by power source 426.

A selection circuitry 438 may determine when portable audio device 412 mechanically attached to a corresponding interface region of a vehicular panel, and/or whether the portable audio device 412 is electrically and/or electronically coupled and/or connected to the corresponding interface region of the vehicular panel. When selection circuitry 438 determines that interfacing 418 is in wired connection with the vehicular interface region, selection circuitry 438 may select to supply audio performances to speaker 214 (and/or one or more additional speakers 216) from the wired audio interface. When the interface 418 is determined to be in wired connection with the vehicular interface region, selection circuitry 438 may also select to supply power to speaker 414 (and/or one or more additional speakers 416) from the audio amplifier (e.g., via the wired audio interface 418), and may initiate a transition to a lower-power state and/or a power-down of various electronic circuitries of portable audio device 412.

In contrast, when selection circuitry 438 determines that interface 418 is in wireless communication with the vehicular interface region, selection circuitry 438 may select to supply performances to speaker 414 (and/or one or more additional speakers 416) from wireless interface 428. When the interface 418 is determined to be in wireless communication with vehicular interface region, selection circuitry 438 may also initiate a transition to a higher-power state and/or a power-up of various electronic circuitries of portable audio device 412, and may select to supply power to speaker 414 (and/or one or more additional speakers 416)-as well as to other electronic circuitries of portable audio device 412-from power source 426.

In various embodiments, portable audio device 412 may comprise a temperature sensor circuitry 436 operable to detect a temperature on behalf of processing circuitry 420. If processing circuitry 420 determines that a detected temperature exceeds a threshold temperature, processing circuitry 420 may operate to at least partially discharge power source 426.

Turning now to FIG. 5, a flowchart illustrating a method 500 for dynamic integration of portable audio devices into a vehicle audio system is shown. The method 500 may be executed by one or more processors according to instructions stored in non-transitory memory (e.g., by processor(s) 104 according to instructions of non-transitory memory 106). Further, it should be understood that at least one of the steps of the method 500 may be executed by other processors, such as one or more processors of a vehicle computing system (e.g., processors of a HMI subunit). In other examples however, all steps of the method may be executed by the same processors.

At 502, method 500 includes, via a companion application, pairing one or more portable audio devices to the vehicle audio system. As will be further described with respect to FIGS. 6 and 7, portable audio devices that are available to be paired may be displayed within a user interface of the companion application, for example as displayed on the HMI or on a mobile device also coupled to the vehicle audio system. The companion application may be specifically coupled to the particular vehicle. A user may then select which of the available portable audio devices to pair with the vehicle audio system. Devices that are available to be paired may be those with a wireless interface in range and/or those that are in wired communication with the vehicle, in some examples.

At 504, method 500 includes, in response to pairing the one or more portable audio devices, automatically recognizing the one or more portable audio devices. For example, when a user pairs a first portable audio device with the vehicle audio system, the vehicle audio system may then recognize the first portable audio device based on one or more identifiers (e.g., a Bluetooth device identifier, a wired connection identifier, or the like). Recognition, in this sense, may include establishing a communication link between each of the one or more portable audio devices and the vehicle audio system. In this way, for the user, pairing a portable audio device in the companion app may result in an established communication link in near real-time as the vehicle audio system may recognize the paired portable audio device automatically in near real-time.

At 506, method 500 includes determining a system output configuration. The system output configuration may include a volume of audio output, a distribution of sound among the individual speakers of the integrated audio system, an equalization of audio signals, bass, mid-range, and treble contributions and levels, and/or any other aspect of the audio output. The system output configuration may be determined based on determining device-specific configurations, as noted at 508, as well as determining custom audio profiles, as noted at 510.

For example, when a portable audio device is paired in the companion app and then recognized by the vehicle audio system, the vehicle audio system may retrieve device specifics from the portable audio device. The device specifics may include a device type, a device model, number of speakers, size and type of speakers, suitable settings, which may include thresholds for levels of different audio frequencies (e.g., bass, mid-range, and treble), and the like.

In some examples, the custom profiles that are determined may be determined automatically by the vehicle audio system based on the device specifics of each recognized device. In other examples, the custom profiles may be determined based on user inputs to the companion app, as will be further described below. In yet further examples, the custom profiles may be determined based on a combination of automatically determined custom profiles and user-selected custom profiles, whereby the automatically determined custom profile is chosen first and then a user may make adjustments via the companion application as they see fit. Further, in some examples, a custom profile may be determined for one or more of the recognized portable audio devices individually. In other examples, a custom profile may be determined for the audio system as a whole. In yet further examples, a subset of the recognized portable audio devices may have a custom profile specific thereto while others are included in a whole system custom profile, based on user selections within the companion application.

At 512, method 500 includes integrating the one or more portable audio devices into the vehicle audio system. In this sense, integration of portable audio devices may comprise including the portable audio devices as one of a plurality of output devices to which audio content may be supplied. The plurality of output devices may also include mainly fixed cabin output speakers (e.g., cabin output speaker(s) 124 of FIG. 1) but also other user devices (e.g., mobile phones, tablets).

In some examples, integration of the portable audio devices may include using audio synchronization protocols such as Bluetooth Low Latency, Wi-Fi based protocols, or Audio-over-IP protocols to achieve time alignment of audio output to mitigate noticeable delays or echo effects. Other protocols may account for network latency, such as precision time protocols. In some examples, one device, such as one of the fixed cabin speakers or the vehicle audio system itself, may be designated as a "primary" device for the purpose of being a reference timer such that all other devices, both fixed cabin speakers and integrated portable devices are aligned according to the timing of the primary device.

Further, integration of portable audio devices may include providing unified volume control across devices while respecting the individual device configurations as determined at 506. For example, adjustments to the volume via a centralized controller (e.g., via a smartphone application like the companion application or a selectable element (like a knob or a turn dial or a scroll bar) of the HMI) may adjust volume of all devices simultaneously. Additionally or alternatively, volume levels may be adjusted dynamically according to individual device scaling based on each integrated devices maximum/minimum output and position within the space to maintain balanced sound. Additionally, dynamic range compression may be applied to mitigate clipping or distortion in smaller, portable speakers when the volume is increased system-wide.

Integrating the portable audio devices may also include aligning sound waves from the multiple speakers in the integrated system (e.g., fixed and portable speakers) to optimize quality and directional sound effects. The one or more processors of the vehicle audio system, which may include digital signal processors, may be configured to steer sound toward specific areas of the vehicle, both exterior and interior. This may involve real-time phase and amplitude adjustments across speakers. Further, integration may include calibration of the system using microphone-based measurements to map out speaker positions and adjust sound beams according to where the portable audio devices reside in the space relative to each other and to the fixed cabin speakers.

Integration of the portable audio devices may also include adaptive and dynamic noise cancellation wherein adaptive filters are used to minimize feedback and interference between the fixed and portable speakers, especially when they are placed close to one another. In some examples, the vehicle audio system may incorporate ambient noise sensing to adjust playback dynamically or generate noise-canceling signals.

At 514, method 500 includes outputting selected audio content via the one or more fixed cabin output speakers of the vehicle and the one or more integrated audio devices according to the determined system output configuration. For example, the audio content may be outputted to each device according to either an individual profile or a whole system profile, as described above.

Turning now to FIGS. 6 and 7, user interfaces of a companion application 600, such as the companion application 118 of FIG. 1 is shown. The companion application as herein described may be used in conjunction with a vehicle audio system of a vehicle to integrate portable audio devices with the vehicle audio system.

FIG. 6 shows a display screen 602 in which the companion application 600 may be displayed. The display screen 602 may be a part of or operably coupled to an HMI of the vehicle in which the companion application 600 is stored and accessible. In other examples, the display screen 602 may be part of or operably coupled to a mobile device (e.g., a smart phone) located in or near the vehicle from which the companion application 600 is accessible.

A user interface 604 may be displayed within the display screen 602. The user interface 604, generally, may display one or more available applications 618. When one of the available applications 618 is selected, such as a devices application 616, the user interface 604 may include a corresponding application interface, such as first application interface 606. In some examples, multiple application interfaces may correspond to the same application. For example, as is shown herein, when the devices application 616 is selected, the first application interface 606 may first be displayed and then, in response to user selection of one or more elements within the first application interface 606, additional application interfaces, such as second application interface 702, as will be described with respect to FIG. 7, may be displayed.

The devices application 616 may be configured for dynamic device integration. As such, the first application interface 606 may include a pair devices element 608. The pair devices element 608, when selected via user input (e.g., a touch selection or click selection), may trigger display of an available devices panel 620. The available devices panel 620 may include selectable elements 610 for each portable audio device that is available to be integrated with the vehicle audio system. Each of the selectable elements 610 within the available devices panel 620 may be selectable by the user to indicate that the corresponding device is to be integrated with the vehicle audio system. The portable audio devices that are shown within the available devices panel 620 may be displayed with their predefined name or identification code. For example, for wireless connection such as Bluetooth, each portable audio device may have a known "name" that is either chosen by the user of the device or by the manufacturer. This name may be broadcast by the device itself and then shown within the user interface to allow the user to correctly identify which devices they want to be paired.

As a non-limiting example, a first occupant of the vehicle may have brought a small portable speaker for the purpose of being an additional dashboard speaker to enhance sound quality within the vehicle while a second occupant of the vehicle may have brought a wearable device (e.g., headphones) that the second occupant does not intend to use while driving. Both the small portable speaker and the wearable device may be displayed as available devices within the available devices panel 620 during a paring process. The user of the companion application 600 may thus discern that the small portable speaker is to be paired and the wearable device is not, and thus the user may select the small portable speaker for pairing but not the wearable device within the interface.

The first application interface 606 may also include a configure audio profile element 612 that may be selectable when one or more portable audio devices are paired with the vehicle audio system. For example, prior to pairing any portable audio devices, the configure audio profile element 612 may be disabled (e.g., unhighlighted), therefore indicating that custom configuration of audio output for integrated portable audio devices is unavailable due to only the fixed cabin speakers being in use by the vehicle audio system. In response to one or more portable audio devices being paired with the vehicle audio system, the configure audio profile element 612 may be enabled (e.g., highlighted), indicating that custom configuration is available.

A finish element 614 may also be included in the first application interface 606 that when selected may save the paired portable devices and the current saved configurations/profiles. As is described above, in response to a user pairing a device (e.g., selecting a device from the available devices panel 620), the vehicle audio system may automatically recognize the paired device (e.g., by its identifier), and may establish a communication link, such as a wireless (e.g., Bluetooth) communication link or wired communication link, between the paired device and the vehicle audio system.

Selection of the configure audio profile element 612 may trigger display of the second application interface 702 as shown in FIG. 7. The second application interface 702 may display each paired device in a list 704. The list 704 may include elements for all currently paired portable audio devices as well as a "whole system" element, which may allow for overall system audio output configuration. For example, by selecting one of the paired portable audio device elements from the list 704, the user may customize audio output configurations for that specific paired device. Conversely, by selecting the whole system element, the user may customize audio output configurations for the combination of the paired portable audio devices and the fixed cabin speakers.

When a device element from the list 704 is selected, a configuration panel 708 may be displayed. The configuration panel 708 may include a frequency column 710 and a configuration column 712. The frequency column 710 may include elements for bass, mid-range, and treble frequency ranges (though it should be understood that other frequency ranges or output parameters, such as volume, output zone, and the like may also be included in the configuration panel 708). Each element in the frequency column 710 may correspond to a selectable element in the configuration column 712. The configuration column 712 may include selectable elements, such as drop down menus, through which the user may select a desired configuration for the corresponding output parameter.

As an example, when a first device element 706 of the list 704 is selected, the configuration panel 708 may correspond to a profile of the first device. Selection of a drop down arrow 716 of a treble configuration element 714 may allow for user selection of one of a plurality of available configurations for the corresponding treble frequency 720. The plurality of available configurations may be based on the output parameter. For example, for frequency parameters, the available configurations may be labeled "1", "2", "3", "4", or "A", "B", "C", and each may correspond to a different level (e.g., percentage of output, level, etc.) for that frequency range. As an example, a configuration that corresponds to a higher level of bass may result in the users being able to hear more bass tones from the outputted audio content. Further, the available configurations that are displayed within the configuration panel 708 (e.g., within a drop down menu, scroll bar, etc.) may be specific to the corresponding selected device. For example, a first device may be a wearable headphone device and may have less options for bass configurations than a large scale boom box device. Other types of selectable elements for configuration of output parameters, such as scroll bars, linear ranges, and the like, may also be included in the configuration panel.

A save element 718 may be selectable to save the selected configurations to memory. Once saved, audio content may be outputted to the devices of the integrated system (e.g., the paired portable audio devices and the fixed cabin speakers) according to the saved configurations. In this way, the user may easily customize audio output configurations for individual portable devices as well as for the system as a whole. Further, in some examples, the system may automatically determine a configuration for each of the paired portable audio devices and the whole system based on retrieved device-specific parameters, such as device type, speaker type, number of speakers, suitable output settings, and the like. For example, for a portable audio device with small speakers, a low amount of bass may be more optimal for sound quality and the system may preset the bass parameter to a corresponding suitable configuration. The system determined configuration may be displayed to the user within the configuration panel 708 initially, however the user may then customize the configuration to their preferences, in some examples.

Various use-case scenarios for dynamic integration of portable audio devices will now be described. In a first scenario, a group of occupants of a vehicle may be attending a tailgate event and may desire to use the vehicle to output audio content (e.g., music) for the tailgate event. A portable audio device such as a boom box may be mounted in a trunk or truck bed of the vehicle and may be connected via a wired or wireless connection to the vehicle. A user may access the companion application via their smart phone and may pair the boom box to the vehicle audio system via the application. In response to the user pairing the boom box, the vehicle audio system may automatically recognize the boom box and establish a communication link. The vehicle audio system may also retrieve device specifics and parameters of the boom box through this communication link. The vehicle audio system may determine a configuration of output parameters, including output configurations for a bass frequency range, a mid frequency range, and a treble frequency range. Through the companion application, the user may customize the configuration as is described above. Then, when audio content is supplied by the vehicle audio system amplifier, for example as chosen by the user (e.g., via a music application accessible by their mobile device, which is also in communication with the vehicle audio system), audio content may be outputted by the in-cabin speakers and the boom box. In particular, the audio content may be outputted by the boom box according to the audio output configuration that the system and/or the user set for that specific device. Because of the chosen configuration, the audio content may be outputted in a manner that improves bass reproduction, which may increase overall sound quality in the particular scenario of a trunk or truck bed positioned boom box intended to convey audio content to open air (e.g., outside).

In a second scenario, a group of occupants of a vehicle may be taking a road trip. One or more portable audio devices, such as small speakers, may be positioned at a dashboard of the vehicle and may be connected via a wired or wireless connection to the vehicle. A user may access the companion application via their smart phone and may pair each of the small speakers to the vehicle audio system via the application. In response to the user pairing each speaker, the vehicle audio system may automatically recognize each speaker and establish a communication link to each speaker. The vehicle audio system may also retrieve device specifics and parameters of each speaker through the respective communication link. The vehicle audio system may determine a configuration of output parameters for each speaker, including output configurations for a bass frequency range, a mid frequency range, and a treble frequency range. Through the companion application, the user may customize the configuration for each and for the whole system as is described above. Then, when audio content is supplied by the vehicle audio system amplifier, for example as chosen by the user (e.g., via a music application accessible by their mobile device, which is also in communication with the vehicle audio system), audio content may be outputted by the in-cabin speakers and the small speakers. In particular, the audio content may be outputted by the small speakers according to the audio output configuration that the system and/or the user set for that specific device. In contrast to the trunk or truck bed positioned boom box, which may be configured for increased bass, as an example given the intention to output audio signals to open air, the small speakers may be configured to output audio content to the vehicle cabin. Specifically, the system determined output configuration and/or the user customized output configuration may be tailored to enhance precision and soundstage within the vehicle cabin itself.

In a third scenario, one user of a vehicle may be hearing impaired and may bring into the vehicle a wireless wearable hearing aid device. The user may pair the wearable hearing aid device to the vehicle audio system through the companion application as displayed on the HMI display of the vehicle. The vehicle audio system may recognize the device, establish a communication link therebetween, and may retrieve device-specific configurations for optimal audio output. The vehicle audio system may determine output configurations for the hearing aid device and/or the user may specify a custom profile configuration for the hearing aid device based on their preferences. Audio content may then be outputted by the cabin mounted speakers to other users of the vehicle and by the hearing aid device to the corresponding wearer user of the device.

Further, it should be understood that combinations of devices may also be possible, wherein multiple different types of devices are integrated into the system in a dynamic manner via the companion application, and different output configurations are set for each different device.

The technical effect of the systems and methods herein disclosed is that portable audio devices may be seamlessly integrated into a vehicle audio system via a companion application with the ability to select device-specific audio profiles for optimized performance.

The description of embodiments has been presented for purposes of illustration and description. Suitable modifications and variations to the embodiments may be performed in light of the above description or may be acquired from practicing the methods. For example, unless otherwise noted, one or more of the described methods may be performed by a suitable device and/or combination of devices, such as the systems described above with respect to FIGS. 1-3. The methods may be performed by executing stored instructions with one or more logic devices (e.g., processors) in combination with one or more additional hardware elements, such as storage devices, memory, image sensors/lens systems, light sensors, hardware network interfaces/antennas, switches, actuators, clock circuits, and so on. The described methods and associated actions may also be performed in various orders in addition to the order described in this application, in parallel, and/or simultaneously. The described systems are exemplary in nature, and may include additional elements and/or omit elements. The subject matter of the present disclosure includes all novel and non-obvious combinations and sub-combinations of the various systems and configurations, and other features, functions, and/or properties disclosed.

The disclosure also provides support for a vehicle audio system, comprising: one or more processors, and memory storing instructions that when executed cause the one or more processors to: recognize one or more portable audio devices paired to the vehicle audio system via a companion application, establish a communication link to each of the one or more portable audio devices, determine an audio output configuration for each of the one or more portable audio devices, integrate each of the one or more portable audio devices into the vehicle audio system, and output audio content via the one or more portable audio devices and one or more cabin output speakers of the vehicle audio system according to the audio output configuration for each of the one or more portable audio devices. In a first example of the system, to determine the audio output configuration for each of the one or more portable audio devices, the one or more processors are configured to retrieve, from each of the one or more portable audio devices, device-specific parameters including suitable audio output settings. In a second example of the system, optionally including the first example, to determine the audio output configuration for each of the one or more portable audio devices, the one or more processors are configured to receive user inputs to the companion application selecting parameter configurations.

The disclosure also provides support for The vehicle audio system of any of the previous claims, wherein the one or more portable audio devices are recognized automatically in response to pairing within the companion application based on a corresponding device identifier.

The disclosure also provides support for a method for a vehicle audio system that includes one or more cabin-mounted speakers, comprising: receiving a pairing of one or more portable audio devices via a companion application, recognizing the one or more paired portable audio devices based on a device identifier, retrieving, from each of the one or more paired portable audio devices, device-specific configurations, determining, based on the device-specific configurations, audio output configurations for each of the one or more paired portable audio devices, integrating the one or more paired portable audio devices into the vehicle audio system, and outputting audio content by the vehicle audio system, wherein outputting audio content includes outputting the audio content to the one or more cabin-mounted speakers as well as outputting the audio content to the one or more paired portable audio devices according to the audio output configurations thereof. In a first example of the method, the audio output configurations for each of the one or more paired portable audio devices is determined based on user selections within the companion application.

The disclosure also provides support for a computing device communicatively coupled to a vehicle audio system, comprising: a display screen configured to display a companion application, wherein the companion application includes a first application interface including one or more selectable elements corresponding to one or more available portable audio devices, wherein selection of one of the one or more selectable elements causes the vehicle audio system to recognize a corresponding portable audio device and integrate the corresponding portable audio device into the vehicle audio system.

As used herein, an element or step recited in the singular and proceeded with the word "a" or "an" should be understood as not excluding plural of said elements or steps, unless such exclusion is stated.

Furthermore, references to "one embodiment" or "one example" of the present disclosure are not intended to be interpreted as excluding the existence of additional embodiments that also incorporate the recited features.

As used herein, terminology in which "an embodiment," "some embodiments," or "various embodiments" are referenced signify that the associated features, structures, or characteristics being described are in at least some embodiments, but are not necessarily in all embodiments. Moreover, the various appearances of such terminology do not necessarily all refer to the same embodiments, and are not intended to be interpreted as excluding the existence of additional embodiments that also incorporate the recited features.

As used herein, terminology in which elements are presented in a list using "and/or" language means any combination of the listed elements. For example, "A, B, and/or C" may mean any of the following: A alone; B alone; C alone; A and B; A and C; B and C; or A, B, and C.

As used herein, the term "substantially similar to" is construed to mean the same as with a tolerance for variation that a person of ordinary skill in the art would recognize as being reasonable.

As used herein, terms such as "first," "second," "third," and so on are used merely as labels, and are not intended to impose numerical requirements or a particular positional order on their objects.

The following claims particularly point out certain combinations and sub-combinations regarded as novel and non-obvious. These claims may refer to "an" element or "a first" element or the equivalent thereof. Such claims should be understood to include incorporation of one or more such elements, neither requiring nor excluding two or more such elements. Other combinations and sub-combinations of the disclosed features, functions, elements, and/or properties may be claimed through amendment of the present claims or through presentation of new claims in this or a related application. Such claims, whether broader, narrower, equal, or different in scope to the original claims, also are regarded as included within the subject matter of the present disclosure.

## Claims

1. A vehicle audio system, comprising:
one or more processors; and
memory storing instructions that when executed cause the one or more processors to:
recognize one or more portable audio devices paired to the vehicle audio system via a companion application;
establish a communication link to each of the one or more portable audio devices;
determine an audio output configuration for each of the one or more portable audio devices;
integrate each of the one or more portable audio devices into the vehicle audio system; and
output audio content via the one or more portable audio devices and one or more cabin output speakers of the vehicle audio system according to the audio output configuration for each of the one or more portable audio devices.

2. The vehicle audio system of claim 1, wherein to determine the audio output configuration for each of the one or more portable audio devices, the one or more processors are configured to retrieve, from each of the one or more portable audio devices, device-specific parameters including suitable audio output settings.

3. The vehicle audio system of claim 1 or 2, wherein to determine the audio output configuration for each of the one or more portable audio devices, the one or more processors are configured to receive user inputs to the companion application selecting parameter configurations.

4. The vehicle audio system of any preceding claim, wherein the one or more portable audio devices are recognized automatically in response to pairing within the companion application based on a corresponding device identifier.

5. The vehicle audio system of any preceding claim, wherein the audio output configuration includes configurations for bass frequency range, mid-range frequency range, and treble frequency range.

6. The vehicle audio system of any preceding claim, wherein the one or more portable audio devices comprise at least one of portable speakers, headphones, wearable audio devices, and boom boxes.

7. The vehicle audio system of any preceding claim, wherein integrating the one or more portable audio devices includes using audio synchronization protocols to achieve time alignment of audio output across the one or more portable audio devices and the one or more cabin output speakers.

8. A method for a vehicle audio system that includes one or more cabin-mounted speakers, comprising:
receiving a pairing of one or more portable audio devices via a companion application;
recognizing the one or more paired portable audio devices based on a device identifier;
retrieving, from each of the one or more paired portable audio devices, device-specific configurations;
determining, based on the device-specific configurations, audio output configurations for each of the one or more paired portable audio devices;
integrating the one or more paired portable audio devices into the vehicle audio system; and
outputting audio content by the vehicle audio system, wherein outputting audio content includes outputting the audio content to the one or more cabin-mounted speakers as well as outputting the audio content to the one or more paired portable audio devices according to the audio output configurations thereof.

9. The method of claim 8, wherein the audio output configurations for each of the one or more paired portable audio devices is determined based on user selections within the companion application.

10. The method of claim 8 or 9, wherein the device-specific configurations include device type, number of speakers, speaker type, and suitable audio settings.

11. The method of any of claims 8 to 10, wherein integrating the one or more paired portable audio devices includes providing unified volume control across the one or more paired portable audio devices and the one or more cabin-mounted speakers.

12. The method of claim 11, wherein providing the unified volume control comprises adjusting volume levels of the one or more paired portable audio devices and the one or more cabin speakers simultaneously, via a centralized controller.

13. The method of any of claims 8 to 12, wherein integrating each of the one or more portable audio devices includes adaptive and dynamic noise cancellation using adaptive filters to minimize feedback and interference between the one or more cabin output speakers and the one or more portable audio devices.

14. The method of any of claims 8 to 13, wherein integrating the one or more paired portable audio devices includes aligning sound waves from the one or more cabin speakers and the one or more paired portable audio devices.

15. The method of any of claims 8 to 14, wherein recognizing the one or more portable audio devices comprises establishing a communication link between each of the one or more portable audio devices and the vehicle audio system.
